# EUROPÄISCHE PATENTSCHRIFT

(11) **EP 1 982 390 B1**
(45) Veröffentlichungstag und Bekanntmachung des Hinweises auf die Patenterteilung: **14.03.2012**
(21) Anmeldenummer: 07702721.7
(22) Anmeldetag: 12.01.2007
(51) Int. Cl.: H01R 13/66, H01F 38/14

(54) **Mess- und Übertragungssystem mit einem Steckverbindungssystem**
Measurement and transmitting system with connecting system
Système de mesure et transmission avec système de connexion

(30) Priorität: 08.02.2006 DE 102006005632
(43) Veröffentlichungstag der Anmeldung: 22.10.2008
(73) Patentinhaber: Knick Elektronische Messgeräte GmbH & Co. KG, 14163 Berlin (DE)
(72) Erfinder: BLAAK, Holger, 10965 Berlin (DE); FEUCHT, Wolfgang, 14165 Berlin (DE); GIEBSON, Jörg, 14476 Satzkorn (DE)
(74) Vertreter: Hübner, Gerd
(86) Internationale Anmeldenummer: PCT/EP2007/000248
(87) Internationale Veröffentlichungsnummer: WO 2007/090498

(56) Entgegenhaltungen:
- DE-C1- 19 719 730
- US-A1- 2005 194 296

## Beschreibung

Die Erfindung betrifft ein Mess- und Übertragungssystem mit einem Steckverbindungssystem zur Übertragung von Daten- und Energieversorgungssignalen zwischen einer Sensoreinrichtung und einer Basiseinheit mit den im Oberbegriff des Patentanspruches 1 angegebenen Merkmalen. Wenn dabei von einem "Verbindungssystem" die Rede ist, so sollen darunter alle möglichen mechanisch und elektrisch verbind- und trennbaren Kopplungsmechanismen gemeint sein, wobei Steckverbinder mit Steck- und Buchsenelement natürlich die in der Elektrotechnik gebräuchlichsten Vertreter solcher Verbinder darstellen.

Die kontaktlose Übertragung von Schaltsignalen und Wechselspannungen in Telekommunikations- und Datenübertragungssystemen ist beispielsweise aus der DE 195 40 854 A1 in Form eines elektromagnetischen Mehrfachkopplers bekannt. Die dabei verwendeten kontaktfreien und passiven Übertragungsmittel des Mehrfachkopplers ersetzen Steckverbindungen und ermöglichen die galvanische Trennung der elektrischen Signale zwischen beispielsweise einem Hauptgerät der Telekommunikations- und Datenübertragungstechnik und einem außenliegenden Bediengerät, wie es beispielsweise in explosionsgefährdeten Anwendungsbereichen, wie Treibstofflager, Erdölförderanlagen und Erdölverarbeitungsanlagen eingesetzt werden soll.

Die DE 100 55 090 A1 offenbart ein Steckverbindungssystem zum Anschluss einer Übertragungsleitung an einen Sensor, das ebenfalls kontaktlos arbeitet und mit einer steckerinternen Elektronik versehen ist. Die Signalübertragung erfolgt auf induktivem Wege, wobei das übertragene Signal ein Versorgungsspannungs- und Messsignal in überlagerter Form umfasst.

Die US 2005/0194296 A1 offenbart ein in sich geschlossenes pH-Messsystem für eine bojengestützte Wasser-Chloriervorrichtung. Die Chlorierboje ist ein eigenständiges abgeschlossenes System, das mit einem pH-Sensor und einem Temperatursensor versehen und über eine entsprechende Mikroprozessor-Einrichtung zur Abgabe von Chlor beispielsweise in einen Swimmingpool gesteuert werden kann. Mit einem gattungsgemäßen Mess- und Übertragungssystem hat dieser Stand der Technik nichts zu tun.

Der nächstkommende Stand der Technik ist durch die DE 197 19 730 C1 repräsentiert, die sich ebenfalls mit einem Steckverbindungssystem zur kontaktlosen Übertragung von Daten- und Energieversorgungssignalen zwischen einer Sensoreinrichtung und einer Basiseinheit in einem Mess- und Übertragungssystem beschäftigt. Dabei ist eine Sensoreinrichtung beispielsweise für einen Temperaturfühler mit einem sensorseitigen Steckverbindungselement gekoppelt. Die Sensoreinrichtung verfügt über eine gewisse "Intelligenz", da sie einen AD-Wandler für das Messsignal des den Messsensor repräsentierenden Thermopaares und eine diesem nachgeschaltete mikroprozessorgestützte Steuer- und Speichereinheit aufweist. Im sensorseitigen Steckverbindungselement, das mit der Sensoreinrichtung gekoppelt ist, ist eine Daten-Modulator- Demodulator-Einheit in Kombination mit einem Energiesignalempfänger vorgesehen, die mit einem ersten Koppelpartnerelement einer induktiven Kopplung zur kontaktlosen Übertragung von Daten- und Energieversorgungssignalen verbunden ist. Das zweite Koppelpartnerelement der induktiven Kopplungsstrecke sitzt im basis-seitigen Steckverbindungselement, das daten- und energieversorgungstechnisch an die entsprechenden Leitungen eines Bussystems angebunden ist. In diesem basisseitigen Steckverbindungselement ist wiederum kombiniert eine Daten-Modulator-Demodulator-Einheit mit Energiesignalsender vorgesehen, die über die vom Bussystem herrührende Primärstromversorgung für eine Spannungsversorgung des Sensorsystems sorgt.

Zum Hintergrund der Erfindung ist darauf hinzuweisen, dass derartige Mess- und Übertragungssysteme vielfach in rauer Industrieumgebung, wie beispielsweise in großtechnischen chemischen Prozessanlagen, eingesetzt werden. Die Messstellen sind dabei oftmals von der zentralen Leitwarte weit entfernt. Problematisch für das Prozessbedienungspersonal ist daher die Tatsache, dass vor Ort an einer Messstelle bei Erkennen eines Fehlerzustandes oder einer Unregelmäßigkeit keine direkte Eingriffsmöglichkeit für das Prozessbedienungspersonal besteht. Als Beispiel kann hier ein Kalibratioasvorgang an einem elektrochemischen Messsensor, wie einer pH-Messsonde genannt werden.

Davon ausgehend liegt der Erfindung die Aufgabe zugrunde, ein Mess- und Übertragungssystem mit einem Steckverbindungssystem zur vorzugsweise kontaktlosen Übertragung von Daten- und Energieversorgungssignalen anzugeben, bei dem am Ort des Verbindungssystems selbst eine Eingriffsmöglichkeit für das Prozessbedienungspersonal besteht und das Steckverbindungssystem mit einer erweiterten Funktionalität ausgestattet ist.

Diese Aufgabe wird durch die im Kennzeichnungsteil des Anspruches 1 angegebenen Merkmale gelöst, wonach eine Eingabeeinheit an mindestens einem der Verbindungselemente zur Eingabe von sensorrelevanten Befehlen in beiden Verbindungselementen eine mikroprozessorgestützte Steuer- und Speichereinheit vorgesehen sind. Bei dieser Eingabeeinheit kann es sich beispielsweise um einen einfachen Tastknopf handeln, mit dem z. B. ein Startsignal für eine Kalibriervorgang der mit dem Verbindungssystem gekoppelten elektrochemischen Sensoreinrichtung eingebbar ist. Auch Testroutinen für die Ermittlung des Sensorzustandes können durch Betätigung der Eingabeeinheit initiiert werden. Weitere Varianten für die Eingabeeinheit können beispielsweise ein Magnetschalter oder eine elektromagnetisch arbeitende Übertragungseinrichtung, wie beispielsweise ein RFID-Chip oder eine IrDA-Schnittstelle sein. Möglich wäre auch die Eingabe über einen Fingerprint-Sensor. Damit wäre beispielsweise eine Nutzerericennuttg bzw. Zugangsberechtigung machbar. Überdies ist dann eine lückenlose Rückverfolgbarkeit der Zugriffe auf das System (Stichwort Audit-Trail) gegeben.

Gemäß einer weiteren bevorzugten Ausführungsform kann am Verbindungssystem eine optische Anzeigeeinheit vorgesehen sein, mittels derer eine befehlsrelevante Meldung visualisierbar ist. Es kann sich dabei - wie in der zeitgleich von der Anmelderin hinterlegten Patentanmeldung mit identischem Titel "Verbindungssystem, insbesondere Steckverbindungssystem zur Übertragung von Daten- und Energieversorgungssignalen" offenbart ist - um eine optische Diagnose-Anzeigeeinheit zur Visualisierung von Zustandsparametern innerhalb des Mess- und Übertragungssystems handeln. Mit Hilfe dieser Diagnose-Anzeigeeinheit erkennt das Prozessbedienungspersonal vor Ort, dass beispielsweise aufgrund einer durchgeführten Testroutine eine Kalibrierung der Sensoreinrichtung notwendig wäre. Das Personal kann dann mit Hilfe der gemäß der vorliegenden Erfindung vorgesehenen Eingabeeinheit am Verbindungssystem direkt dem Befehl zur Durchführung des oben erwähnten Kalibriervorganges geben. Die Durchführung der Kalibrierung und deren erfolgreicher Verlauf wiederum können über die optische Anzeigeeinheit dann in Form einer befehlsrelevanten Rückmeldung ebenfalls visualisiert werden.

Grundsätzlich kann die optische Diagnose-Anzeigeeinheit auf einer oder mehreren Leuchtdioden basieren, wobei unterschiedliche Zustandsparameter des Mess- und Übertragungssystems durch unterschiedliche Farbgebung und/oder Blinkfrequenzen des Visualisierungssignals anzeigbar sind. So können auch mehrere, den Grundfarben Rot, Blau und Grün entsprechende Leuchtdioden in der optischen Diagnose-Anzeigeeinheit vorgesehen sein. Diese sind nach dem Prinzip der additiven Farbmischung zur Generierung eines beliebig-farbigen Visualisierungssignals ansteuerbar.

Bei einer pH-Messstelle etwa könnte die Farbe des Leuchtdiodenmoduls in Abhängigkeit von der gemessenen Wasserstoffionenkonzentration angesteuert werden. Damit kann die optische Diagnose-Anzeigeeinheit dem sogenannten Lackmus-Test nachempfunden werden. Bei einem niedrigen gemessenen pH-Wert leuchtet die optische Diagnose-Anzeigeeinheit rot, bei hohem pH-Wert blau.

Andere optische Anzeigen, wie beispielsweise LCD-Displays, die gegebenenfalls Fehler- oder Statuscodes bzw. gleich Klartextmeldungen ausgeben, sind ebenfalls einsetzbar.

In einer weiteren bevorzugten Ausführungsform kann das Verbindungssystem zusätzlich mit einer Schnittstelle zur drahtlosen Datenkommunikation mit einer separaten Instanz, wie z. B. einem PDA, MDA, PC Laptop und dergleichen ausgestattet sein. Die Schnittstelle kann als Funk- oder Infrarotschnittstelle ausgeführt werden, wobei die Infrarot-Übertragung (IrDA) gegenüber Funklösungen, wie beispielsweise Bluetooth, signifikante Vorteile, wie einen geringeren Energiebedarf und eine hohe Sicherheit der Datenübertragung durch den direkten optischen Übertragungsweg sowie einen unkomplizierten Verbindungsaufbau, zeigt. Zudem gehört eine solche Schnittstelle heute bereits zur Grundausstattung vieler Kommunikationsgeräte.

Weitere Merkmale, Vorteile und Einzelheiten des Erfindungsgegenstandes ergeben sich aus der nachfolgenden Beschreibung, in der ein Ausführungsbeispiel anhand der beigefügten Zeichnungen näher erläutert wird. Es zeigen:
- Fig. 1 und 2: Seitenansichten eines Steckverbindungssystems in gekoppeltem und gelöstem Zustand,
- Fig. 3: ein Blockdiagramm des internen Aufbaus des Steckverbindungssystems, und
- Fig. 4: einen Axialschnitt eines Buchsenelements des Steckverbindungssystems.

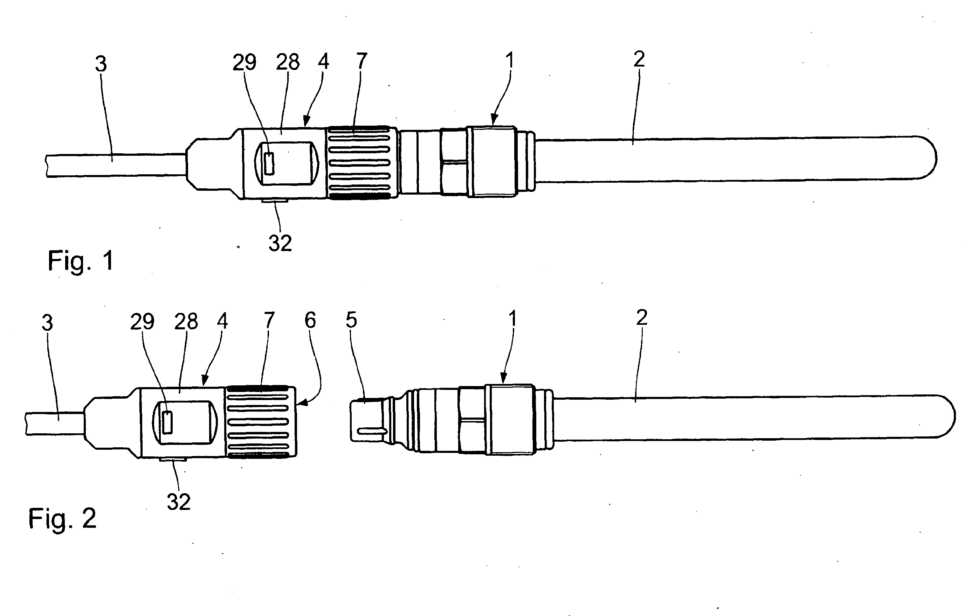

Das in den Fig. 1 und 2 gezeigte Steckverbindungssystem umfasst ein sensorseitiges Steckerelement 1, an dem direkt eine hier schematisch röhrenförmig gezeigte Sensoreinrichtung 2 befestigt ist. Es kann sich dabei z. B. um eine pH-Messsonde mit Temperaturerfassung, aber auch um beliebig andere Sensoren, wie beispielsweise eine Sauerstoff- oder Leitfähigkeits-Messsonde handeln. Die Sensoreinrichtung 2 sitzt dabei in dem zu überwachenden Prozess. Um die Messdaten an eine entsprechende Basiseinheit, wie beispielsweise ein Feldbusgerät weiterzuleiten, wird über das erfindungsgemäße Steckverbindungssystem eine Daten- und Versorgungsleitung 3 zum Feldbusgerät angekoppelt. Die Datenleitung könnte dabei auch als zweiadrige Busleitung ausgeführt sein. Mit dem Steckerelement 1 kooperiert dabei das Buchsenelement 4, das eine dem Steckteil 5 des Steckelements 1 formangepasste Aufnahme 6 zur mechanischen und induktiven Kopplung zwischen Steckerelement 1 und Buchsenelement 2 aufweist. Die hier nicht näher zu beschreibende Verrastung zwischen dem Steckerelement 1 und dem Buchsenelement 4 wird durch eine Lösehülse 7 entarretiert, sodass das Steckverbindungssystem in die entkoppelte Stellung gemäß Fig. 2 verbringbar ist.

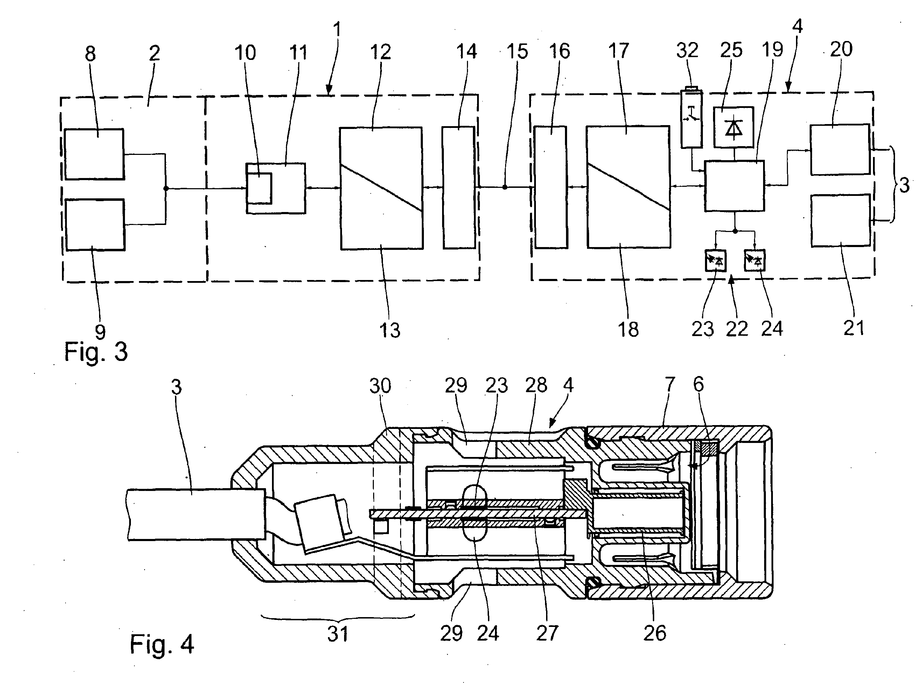

Aus den Fig. 3 und 4 ist der funktionale Aufbau des Steckverbindungssystems mit dem Steckerelement 1 und dem Buchsenelement 4 erkennbar. So weist die Sensoreinrichtung 2 beispielsweise einen Elementarsensor 8 zur Erfassung eines pH-Wertes und/oder eines Redox-Potentials einer Prozessflüssigkeit und einen Elementarsensor 9 zur Erfassung der Temperatur der Prozessflüssigkeit auf. Beide Sensoren 8, 9 liefern jeweils ein analoges Spannungssignal, das an den signaltechnisch angekoppelten AD-Wandler 10 in Steckerelement gegeben wird. Letzterer ist in einen Mikrocontroller 11 integriert, der als zentrale Steuer- und Speichereinheit für die grundsätzliche Steuerung, die Verarbeitung von Befehls- und Messdaten und deren Weitergabe in bekannter Weise funktional zuständig ist.

Im Steckerelement 1 ist ferner ein Schaltungskomplex mit Energiesignalempfänger 12 und Daten-Modulator-Demodulator-Einheit 13 sowie ein erstes Koppelpartnerelement 14 für die induktive kontaktlose Koppelstrecke 15 zwischen Steckerelement 1 und Buchsenelement 4 vorgesehen.

Das zweite Koppelpartnerelement 16 ist kopfseitig am Buchsenelement 4 angeordnet und steht mit einem Schaltungskomplex aus Energiesignalsender 17 und Modulator-Demodulator-Einheit 18 in Verbindung. Analog dem Steckerelement 1 übernimmt auch im Buchsenelement 4 ein Mikrocontroller 19 die zentralen Steuer- und Speicherausgaben im Zusammenhang mit der Energieversorgung und dem Datenaustausch des Steckverbindungssystems. Letzterer erfolgt über ein RS 485-Modem als Datenschnittstelle 20 zu einer nicht näher dargestellten Basiseinheit, wie beispielsweise einem Profibus-Feldgerät. Schließlich ist die gesamte Steckverbindungseinheit über eine Primärstromversorgung 21 mit Energie versorgt. Das gesamte Steckverbindungssystem mit der Sensoreinrichtung 2 genügt den Explosionsschutzbestimmungen.

Im Buchsenelement 4 ist schließlich eine als Ganzes mit 22 bezeichnete optische Diagnose-Anzeigeeinheit vorgesehen, die vom Mikrocontroller 19 angesteuert wird und im hier gezeigten Ausführungsbeispiel zwei Leuchtdioden 23, 24 umfasst. In noch näher zu erörternder Weise dienen diese beiden Leuchtdioden 23, 24 zur Visualisierung von Zustandsparametern innerhalb des Mess- und Übertragungssystems.

Bevor hierauf eingegangen wird, soll kurz die grundsätzliche Funktionsweise des Steckverbindungssystems, wie sie an sich aus dem Stand der Technik bekannt ist, umrissen werden. Ausgehend von der Sensorseite werden die von den beiden Elementarsensoren 8, 9 gelieferten Analogsignale im AD-Wandler 10 digitalisiert. Der Mikrocontroller 11 errechnet die entsprechenden Messwerte und gibt diese auf das den Energiesignalempfänger 12 und die Modulator-Demodulator-Einheit 13 realisierende Schaltungsteil aus. Dieses setzt die Digitalinformationen über die Messwerte in eine für die Übertragung über die induktive Koppelstrecke 15 geeignete Modulation um, wofür beispielsweise eine Amplituden-, Frequenz- oder Phasenmodulation in Frage kommen. Auf der Seite des Buchsenelements 4 werden die entsprechenden Digitalinformationen von der Modulator-Demodulator-Einheit 18 herausgefiltert und über die Datenschnittstelle 20 und die Busleitung 3 an ein Feldgerät zur Weiterverarbeitung übermittelt. Der Mikrocontroller 19 steuert dabei den Datenfluss, indem er beispielsweise die Datenschnittstelle 20 von Empfangen auf Senden schaltet.

Zur Spannungsversorgung des gesamten Steckverbindungssystems wird ausgehend von der basisseitigen Primärstromversorgung 21 über den Mikrocontroller 19 der Energiesignalsender 17 mit Modulator-Demodulator-Einheit 18 so gesteuert, dass über die Koppelstrecke 15 neben aufmodulierten Datensignalen, wie sie beispielsweise zur Parametrisierung der Sensoreinrichtung 2 dienen, auch Energieversorgungssignale, also beispielsweise eine Trägerspannung übertragen werden. Diese wird vom Energiesignalempfänger 12 mit Modulator-Demodulator-Einheit 13 so aufbereitet, dass daraus die gesamte Spannungsversorgung der Komponenten im Steckerelement 1 realisiert werden kann.

Es ist ferner eine Diagnose-Anzeigeeinheit 22 vorgesehen, die vom Mikrocontroller 19 gesteuert und als Statusanzeige zur Visualisierung von Zustandsparametern direkt am Steckverbindungssystem dient. Damit ist eine einfache V or-Ort-Diagnose des in dem Steckverbindungssystem vorgesehenen Messsystems möglich.

So kann zum einen der ordnungsgemäße Zustand der Energieversorgung beispielsweise durch Dauerlicht der grünen Leuchtdiode 23 bzw. ein Spannungsausfall oder eine ungenügende Energieversorgung durch ein Ausschalten dieser LED 23 signalisiert werden. Eine fehlerfreie Datenübertragung innerhalb des Steckverbindungssystems über Steckerelement 1 und Buchsenelement 4 und auch eine fehlerfreie Datenübertragung zwischen dem Steckverbindungssystem selbst und dem Feldgerät als übergeordneter Basiseinheit kann durch Blinken der grünen Leuchtdiode 23 signalisiert werden. Eine gestörte Datenübertragung zwischen den beschriebenen Kommunikationspartnern kann beispielsweise mittels Dauer- oder Blinklicht der roten Leuchtdiode 24 dargestellt werden.

Ein weiterer Zustandsparameter, der visualisiert werden kann, ist beispielsweise der Sensorstatus. Dazu enthält das Steckerelement Mittel zur Funktionsüberwachung. Bei ionensensitiven Sensoren beispielsweise, die in der Regel aus einer hochohmigen Messelektrode und einer relativ niederohmigen Bezugselektrode bestehen, wird dazu der Innenwiderstand der Elektroden gemessen, indem Testspannungen den eigentlichen DC-Messsignalen überlagert werden. Aus der Beziehung zwischen Ausgangsspannung und Testspannung kann die Impedanz der hochohmigen Messelektrode bzw. der Bezugselektrode errechnet werden. Diese Berechnung kann von den Mikrocontrollern 11 bzw. 19 im Steckverbindungssystem selbst oder in einer gesonderten Basiseinheit, wie dem Feldgerät, durchgeführt werden. Wenn der ermittelte Innenwiderstand festgelegte Grenzen über- oder unterschreitet, ist dies ein Zeichen dafür, dass in einer der Elektroden ein Fehler aufgetreten ist. Diese Überprüfung erfolgt in aller Regel im Feldgerät, das im Fehlerfall eine entsprechende Fehlermeldung generiert und diese über die Datenschnittstelle 20 an das Buchsenelement 4 des Steckverbindungssystems weitergibt. Dessen Mikrocontroller 19 kann daraufhin die rote Leuchtdiode 24 ansteuern. Unterschiedliche Fehlerursachen, wie Störung der Datenübertragung oder Elektrodenfehler, können dann durch unterschiedliche Blinkfrequenzen der Leuchtdiode 24 visuell dargestellt werden.

Die Überprüfung von Fehlern und/oder Diagnosegrenzen kann auch direkt im Steckverbindungssystem über deren Mikrocontroller 11, 19 erfolgen. Das Steckverbindungssystem kann damit unabhängig vom Feldgerät Fehlermeldungen generieren und diese ebenfalls durch die Leuchtdioden 23, 24 anzeigen lassen.

Die Leuchtdioden 23, 24 können ferner auch zur Übertragung von Informationsdaten benutzt werden. Dazu wird ihre Ansteuerung vom Mikrocontroller 19 derart vorgenommen, dass das sichtbare LED-Licht für die Datenübertragung zusätzlich moduliert ist. Als Modulation kommen wiederum eine Amplituden-, Frequenz- oder Phasenmodulation in Frage. Mittels eines Zusatzgerätes können diese Daten dann aus dem LED-Signal extrahiert und weiter ausgewertet werden.

Schließlich zeigt Fig. 3 im Buchsenelement 4 noch eine separate Datenschnittstelle 25 in Form einer IrDA-Infrarotschnittstelle.

Anhand von Fig. 4 ist der innere mechanische Aufbau des Buchsenelementes 4 zu erläutern. So ist das zweite Koppelpartnerelement 16 in Form einer angedeuteten Induktionsspule 26 als Kern der ringförmigen Aufnahme 6 für das Steckteil 5 ausgelegt. Bei eingestecktem Steckteil 5 kommt eine entsprechende Ringspule im Kopf des Steckteils 5 radial außerhalb der Induktionsspule 26 zuliegen, womit die Koppelstrecke 15 gebildet ist.

Die elektronischen Komponenten des Buchsenelementes 4, wie sie anhand von Fig. 3 erörtert wurden, sind auf einer zentralen Leiterplatte 27 im Gehäuse 28 des Buchsenelements 4 angeordnet. Dazu gehören auch die beiden Leuchtdioden 23, 24, deren Lichtsignale über Fenster 29 im Gehäuse 28 des Buchsenelementes 4 erkennbar sind. Die Lichtleitung zwischen den LEDs 23, 24 und dem Fenster 29 kann über nicht näher dargestellte Lichtleiter in Form beispielsweise Y-förmiger Kunststoffkörper verbessert werden. Generell ist festzuhalten, dass alle lichtemittierenden Komponenten im Buchsenelement 4 über entsprechende Fenster im Gehäuse 28 einen Licht- bzw. Strahlungsaustausch ermöglichen müssen. Beispielhaft ist in Fig. 4 strichliert ein Ringfenster 30 im rückwärtigen Gehäuseabschnitt 31 angedeutet, über das in alle Radialrichtungen das Licht nicht näher dargestellter Leuchtdioden abgestrahlt werden kann.

Wie in den Fig. 1, 2 und 3 erkennbar ist, weist das Buchsenelement 4 als Kern der vorliegenden Erfindung an seinem Gehäuse 28 einen Taster 32 auf, der mit dem Mikrocontroller 19 in Verbindung steht. Mit Hilfe dieses Tasters 32 können die eingangs erwähnten sensorrelevanten Befehle in das System eingegeben werden, wie beispielsweise der Befehl zur Durchführung einer Kalibrierung. Dieser Befehl wird über den Mikrocontroller 19 und die Datenschnittstelle 20 an die entfernt liegende Leitwarte weitergegeben, die dann den Kalibrierungsablauf steuern kann. Alternativ dazu können auch die Mikrocontroller 19, 11 die entsprechende "Intelligenz" aufweisen, sodass die Kalibrationssteuerung von dort aus durchgeführt wird. Der Kalibrierungsprozess kann beispielsweise durch ein hochfrequentes Blinken der roten LED 24 visualisiert, der erfolgreiche Abschluss der Kalibrierung durch ein hochfrequentes Blinken der grünen LED 23 angezeigt werden.

Wird die Kalibrierung über einen Fingerprint-Sensor ausgeführt, können Kalibrierdaten - wie in einer Audit-Trail-Protokollierung verlangt - personenbezogen direkt im Stecksystem hinterlegt werden. Audit-Trail ermöglicht es, genau zu prüfen, wer wann welche Kalibration und/oder welche Fehlermeldung bearbeitet hat. Diese Informationen können beispielsweise von der übergeordneten Einheit, z. B. ein Feldgerät, angezeigt und/oder ausgewertet werden.

## Patentansprüche

1. Mess- und Übertragungssystem mit
- eines Sensoreinrichtung (2),
- einer entfernt angeordneten Basiseinheit und
- einem Steckverbindungssystem zur Übertragung von Daten- und Energieversorgungssignalen zwischen der Sensoreinrichtung (2) und der Basiseinheit, umfassend
- ein sensorseitiges Verbindungselement (1), das an der Sensoreinrichtung (2) befestigt ist, mit
= einem Energiesignalempfänger (12),
= einer mit mindestens einem Messsensor (8, 9) der Sensoreinrichtung zumindest mittelbar signaltechnisch gekoppelten Daten-Modulator-Demodulator-Einheit (13), sowie
= einem ersten Koppelpartnerelement (14) zur kontaktlosen Übertragung von Daten- und Energieversorgungssignalen über eine Koppelstrecke (15),
- ein basisseitiges Verbindungselement (4), das über eine Daten- und Versorgungsleitung (3) an die entfernte Basiseinheit angekoppelt wird, mit
= einem zweiten Koppelpartnerelement (16) der Koppelstrecke (15),
= einem Energiesignalsender (17),
= einer Daten-Modulator-Demodulator-Einheit (18),
= einer Datenschnittstelle (20), die mit der Basiseinheit datentechnisch verbindbar ist, sowie
= einer Primärenergieversorgung (21), und
- eine mikroprozessorgestützte Steuer- und Speichereinheit (19) in mindestens einem der Verbindungselemente (1, 4),
**gekennzeichnet durch**
- eine Eingabeeinheit (32) an mindestens einem der Verbindungselemente (4) zur Eingabe von sensorrelevanten Befehlen.

2. Mess- und Übertragungssystem nach Anspruch 1 für eine elektrochemische Sensoreinrichtung, **dadurch gekennzeichnet, dass** mittels der Eingabeeinheit (32) ein Startsignal für einen Kalibriervorgang an der Sensoreinrichtung eingebbar ist.

3. Mess- und Übertragungssystem nach Anspruch 1 oder 2, **dadurch gekennzeichnet, dass** Testroutinen für die Ermittlung des Sensorzustandes durch Betätigung der Eingabeeinheit (32) initiierbar sind.

4. Mess- und Übertragungssystem nach einem der vorgenannten Ansprüche, **dadurch gekennzeichnet, dass** die Eingabeeinheit ein Tastknopf (32) ist.

5. Mess- und Übertragungssystem nach einem der vorgenannten Ansprüche 1 bis 3, **dadurch gekennzeichnet, dass** die Eingabeeinheit ein Magnetschalter ist.

6. Mess- und Übertragungssystem nach einem der vorgenannten Ansprüche 1 bis 3, **dadurch gekennzeichnet, dass** die Eingabeeinheit ein Fingerprint-Sensor ist.

7. Mess- und Übertragungssystem nach einem der vorgenannten Ansprüche 1 bis 3, **dadurch gekennzeichnet, dass** die die Eingabeeinheit eine elektromagnetisch arbeitende Übertragungseinrichtung ist.

8. Mess- und Übertragungssystem nach einem der vorgenannten Ansprüche, **gekennzeichnet durch** eine optische Anzeigeeinheit (22), mittels derer eine befehlsrelevante Meldung visualisierbar ist.

9. Mess- und Übertragungssystem nach einem der vorgenannten Ansprüche, **gekennzeichnet durch** eine weitere Schnittstelle (25) zur drahtlosen Datenkommunikation mit einer separaten Instanz.

10. Mess- und Übertragungssystem nach einem der vorgenannten Ansprüche, **dadurch gekennzeichnet, dass** zur Auslegung des Verbindungssystems als Steckverbindungssystem das sensorseitige Verbindungselement ein Steckerelement (1) und das sensorabseitige Verbindungselement ein Buchsenelement (4) oder umgekehrt sind.

11. Mess- und Übertragungssystem nach einem der vorgenannten Ansprüche, **dadurch gekennzeichnet, dass** das sensorseitige Verbindungselement (1) und die Sensoreinrichtung (2) fest miteinander verbunden sind.

12. Mess- und Übertragungssystem nach einem der vorgenannten Ansprüche, **dadurch gekennzeichnet, dass** in beiden Verbindungselementen (1, 4) eine mikroprozcssorgestützte Steuer- und Speichereinheit (11, 19) vorgesehen ist.

## Claims

1. Measuring and transmission system with
- a sensor means (2),
- a remotely arranged base unit and
- a plug-in connection system for the transmission of data and power supply signals between the sensor means (2) and the base unit, comprising
- a sensor-side connection element (1), which is connected to the sensor means (2), with
= a power signal receiver (12),
= a data modulator/demodulator unit (13) which is coupled at least indirectly, for the purposes of signaling, to at least one measuring sensor (8, 9) of the sensor means, as well as
= a first coupling partner element (14) for the contactless transmission of data and power supply signals via a coupling path (15),
- a base-side connection element (4), which is coupled to the remote base unit via a data and supply line (3), with
- a second coupling partner element (16) of the coupling path (15),
= a power signal transmitter (17),
= a data modulator/demodulator unit (18),
= a data interface (20) which can be connected to the base unit with respect to data, as well as
= a primary power supply (21),
- a microprocessor-assisted control and memory unit (19) in at least one of the connection elements (1, 4),
**characterized by**
- an input unit (32) on at least one of the connection elements (4) for inputting sensor-relevant commands.

2. Measuring and transmission system according to claim 1 for an electrochemical sensor means, **characterized in that** a signal for starting a calibration process on the sensor means can be input using the input unit (32).

3. Measuring and transmission system according to claim 1 or 2, **characterized in that** test routines for determining the state of the sensor can be initiated by actuating the input unit (32).

4. Measuring and transmission system according to one of the preceding claims, **characterized in that** the input unit is a key button (32).

5. Measuring and transmission system according to one of the preceding claims 1 to 3, **characterized in that** the input unit is a magnetic switch.

6. Measuring and transmission system according to one of the preceding claims 1 to 3, **characterized in that** the input unit is a fingerprint sensor.

7. Measuring and transmission system according to one of the preceding claims 1 to 3, **characterized in that** the input unit is an electromagnetically operating transmission means.

8. Measuring and transmission system according to one of the preceding claims, **characterized by** an optical display unit (22) by means of which a command-relevant message can be displayed.

9. Measuring and transmission system according to one of the preceding claims, **characterized by** a further interface (25) for the wireless communication of data to a separate entity.

10. Measuring and transmission system according to one of the preceding claims, **characterized in that** for configuring the connection system as a plug-in connection system, the sensor-side connection element is a plug element (1) and the sensor-remote connection element is a socket element (4) or vice versa.

11. Measuring and transmission system according to one of the preceding claims, **characterized in that** the sensor-side connection element (1) and the sensor means (2) are rigidly connected to each other.

12. Measuring and transmission system according to one of the preceding claims, **characterized in that** a microprocessor-supported control and memory unit (11, 19) is provided in both connection elements (1, 4).

## Revendications

1. Système de mesure et de transmission comprenant
- un dispositif capteur (2),
- une unité de base disposée à distance et
- un système de liaison par connexion pour la transmission de signaux de données et d'énergie entre le dispositif capteur (2) et l'unité de base, comprenant
- un élément de connexion (1) du côté du capteur qui est fixé sur le dispositif capteur (2), avec
= un récepteur de signaux d'énergie (12),
= une unité de modulation-démodulation de données (13) couplée au moins indirectement par une technique de signaux avec au moins un capteur de mesure (8, 9) du dispositif capteur, ainsi
= qu'un premier élément de couplage (14) pour la transmission sans contact de signaux de données et d'alimentation en énergie par l'intermédiaire d'un trajet de couplage (15),
- un élément de connexion (4) du côté de la base, qui, par l'intermédiaire d'une ligne de connexion (3) de données et d'énergie est couplé avec l'unité de base disposée à distance, comprenant
= un deuxième élément de connexion (16) du trajet de couplage (15),
= un émetteur de signaux d'énergie (17),
= une unité de modulation-démodulation de données (18),
= une interface de données (20) qui peut être reliée par l'intermédiaire des données avec l'unité de base, ainsi
= qu'une alimentation en énergie primaire (21), et
- une unité de commande et de mémoire (19) assistée par microprocesseur dans au moins un des éléments de connexion (1, 4),
**caractérisé par**
- une unité d'entrée (32) sur au moins l'un des éléments de connexion (4) pour la rentrée de commandements relatifs au capteur.

2. Système de mesure et de transmission selon la revendication 1 pour un dispositif de capteur électrochimique **caractérisé en ce qu'**au moyen de l'unité d'entrée (32), un signal de départ pour un processus d'étalonnage au niveau du dispositif capteur peut être engagé.

3. Système de mesure et de transmission selon les revendications 1 ou 2 **caractérisé en ce que** des tests de routine peuvent être initiés pour l'évaluation de l'état du capteur par la mise en oeuvre de l'unité d'entrée (32).

4. Système de mesure et de transmission selon l'une des revendications précitées **caractérisé en ce que** l'unité d'entrée est un bouton poussoir (32).

5. Système de mesure et de transmission selon l'une des revendications précitées de 1 à 3 **caractérisé en ce que** l'unité d'entrée est un commutateur magnétique.

6. Système de mesure et de transmission selon 'une des revendications précitées de 1 à 3 **caractérisé en ce que** l'unité d'entrée est un capteur d'empreinte digitale.

7. Système de mesure et de transmission selon l'une des revendications précitées de 1 à 3 **caractérisé en ce que** l'unité d'entrée est un dispositif de transmission travaillant de façon électromagnétique.

8. Système de mesure et de transmission selon l'une des revendications précitées **caractérisé par** une unité d'affichage optique (22) au moyen de laquelle une information relative à un commandement peut être visualisée.

9. Système de mesure et de transmission selon l'une des revendications précitées **caractérisé par** une autre interface (25) pour la communication de données sans fil avec une instance séparée.

10. Système de mesure et de transmission selon l'une des revendications précitées **caractérisé en ce que**, pour l'interprétation du système de transmission en tant que système de liaison par connexion, l'élément de connexion du côté du capteur est un élément connecteur mâle (1) et que l'élément de liaison en aval du capteur est un élément connecteur femelle (4), ou inversement.

11. Système de mesure et de transmission selon l'une des revendications précitées **caractérisé en ce que** l'élément de connexion (1) du côté du capteur et le dispositif capteur (2) sont reliés de façon rigide l'un à l'autre.

12. Système de mesure et de transmission selon l'une des revendications précitées **caractérisé en ce qu'**une unité de commande et de mémoire assistée par microprocesseur (11, 19) est prévue dans les deux éléments de connexion (1, 4).
